# EUROPEAN PATENT APPLICATION

(11) **EP 4 656 496 A1**
(43) Date of publication of application: **03.12.2025**
(21) Application number: 23918066.4
(22) Date of filing: 27.01.2023
(51) Int. Cl.: B62D 6/00

(54) **STEERING CONTROL METHOD AND STEERING CONTROL DEVICE**

(71) Applicant: Nissan Motor Co., Ltd., Kanagawa 221-0023 (JP)
(72) Inventor: OSAJIMA Shintaro, Atsugi-shi, Kanagawa 243-0123 (JP); TAKADA Motoichiro, Atsugi-shi, Kanagawa 243-0123 (JP); ISHIMOTO Masaya, Atsugi-shi, Kanagawa 243-0123 (JP); ISHIYAMA Koichi, Atsugi-shi, Kanagawa 243-0123 (JP)
(74) Representative: Grünecker Patent- und Rechtsanwälte PartG mbB
(86) International application number: PCT/JP2023/002665
(87) International publication number: WO 2024/157462

(57) **Abstract**

A steering control method for controlling steering force generated by an actuator configured to steer a steered wheel of a vehicle, the steering control method including: detecting (S2) a state in which a rack shaft of a steering mechanism configured to steer the steered wheel is positioned near a stroke end; limiting (S3), when the rack shaft is positioned near a stroke end and driving current of the actuator is greater than or equal to a predetermined value (Ipre), driving current of the actuator at a first upper limit, the first upper limit being less than the predetermined value (Ipre); and limiting (S4), when the rack shaft is not positioned near a stroke end and driving current of the actuator is greater than or equal to the predetermined value (Ipre), driving current of the actuator at a second upper limit, the second upper limit being less than the first upper limit.

## Description

### Technical Field

The present invention relates to a steering control method and a steering control device.

### Background Art

In PTL 1 described below, a technology in which when at the time of performing parking assistance control using automatic steering, a motor cannot be rotated to a target steering angle even when a first upper limit current is flowed to the motor, an upper limit current of the motor is switched to a second upper limit current that is smaller than the first upper limit current and that enables the steering to be held is described.

### Citation List

### Patent Literature

PTL1: JP 2014-136430 A

### Summary of Invention

### Technical Problem

When a state in which even when an actuator to steer steered wheels of a vehicle is driven, the steered wheels cannot be steered to a target steering angle continues, it is required to suppress driving current to prevent abnormal overheating from occurring on the actuator. On the other hand, when the driving current is suppressed when rack end hitting, which is a state in which a rack shaft of a steering mechanism has reached a stroke end, occurs, there is a risk that the steering angle cannot be maintained at a maximum allowable steering angle.

An object of the present invention is to maintain a steering angle at a maximum allowable steering angle when rack end hitting occurs due to an actuator steering steered wheels and also prevent overheating of the actuator due to continuation of a state in which even when the actuator is driven, the steered wheel cannot be steered to a target steering angle.

### Solution to Problem

According to an aspect of the present invention, there is provided a steering control method for controlling steering force generated by an actuator configured to steer a steered wheel of a vehicle, the steering control method including: detecting a state in which a rack shaft of a steering mechanism configured to steer the steered wheel is positioned near a stroke end; limiting, when the rack shaft is positioned near a stroke end and driving current of the actuator is greater than or equal to a predetermined value, driving current of the actuator at a first upper limit, the first upper limit being less than the predetermined value; and limiting, when the rack shaft is not positioned near a stroke end and driving current of the actuator is greater than or equal to the predetermined value, driving current of the actuator at a second upper limit, the second upper limit being less than the first upper limit.

### Advantageous Effects of Invention

According to an aspect of the present invention, it is possible to maintain a steering angle at a maximum allowable steering angle when rack end hitting occurs due to an actuator steering steered wheels and also prevent overheating of the actuator due to continuation of a state in which even when the actuator is driven, the steered wheel cannot be steered to a target steering angle.

The object and advantages of the invention will be realized and attained by means of the elements and combinations particularly pointed out in the claims. It is to be understood that both the foregoing general description and the following detailed description are exemplary and explanatory and are not restrictive of the invention.

### Brief Description of Drawings

FIG. 1 is a diagram illustrative of a schematic configuration example of a driving assistance device of embodiments;
FIG. 2 is a block diagram of an example of a functional configuration of a controller in FIG. 1;
FIG. 3 is a flowchart of a steering control method of a first embodiment;
FIG. 4A is a schematic diagram of change in driving current when a state in which steered wheels become unable to be steered before being steered to a target steering angle does not occur, FIG. 4B is a schematic diagram of change in the driving current when rack end hitting occurs, and FIG. 4C is a schematic diagram of change in the driving current when the steered wheels become unable to be steered before rack end hitting occurs;
FIGS. 5A and 5B are schematic diagrams descriptive of parking assistance control in a first assistance mode;
FIG. 6 is a schematic diagram descriptive of parking assistance control in a second assistance mode; and
FIG. 7 is a flowchart of a steering control method of a third embodiment.

### Description of Embodiments

### (First Embodiment)

### (Configuration)

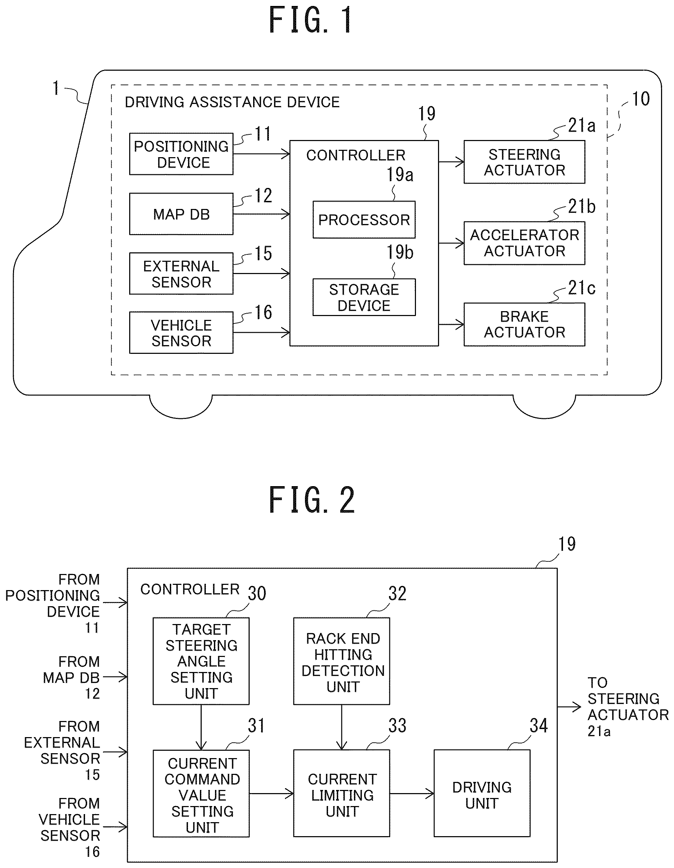

FIG. 1 is a diagram illustrative of a schematic configuration example of a driving assistance device of embodiments. An own vehicle 1 includes a driving assistance device 10 that has a parking assistance function and a travel assistance function. The driving assistance device 10 is an example of a "steering control device" described in the claims.

The parking assistance function is a function that assists the own vehicle 1 in traveling along a target parking route from a current position of the own vehicle 1 to a target parking position. For example, the driving assistance device 10 may perform autonomous driving to control the own vehicle 1 to travel to the target parking position along the target parking route of the own vehicle 1. The autonomous driving to control the own vehicle 1 to travel to the target parking position along the target parking route means control to automatically perform all or a portion of travel along the target parking route of the own vehicle 1 by controlling at least a steering angle among a steering angle, driving force, and braking force of the own vehicle 1.

The travel assistance function means control to automatically perform all or a portion of travel of the own vehicle 1 by controlling at least the steering angle among the steering angle, the driving force, and the braking force of the own vehicle 1. For example, the travel assistance function may include a lane keeping assistance function that assists the own vehicle 1 in traveling within a travel lane. In addition, for example, the travel assistance function performed by the driving assistance device 10 may be an autonomous driving function that causes the own vehicle 1 to autonomously travel along the target travel route to a set destination.

Note that in the following description, controls performed by the driving assistance device 10 to achieve the parking assistance function, the travel assistance function, the lane keeping assistance function, and the autonomous driving function are sometimes referred to as "parking assistance control", "travel assistance control", "lane keeping assistance control", and "autonomous driving control", respectively.

The driving assistance device 10 includes a positioning device 11, a map database (map DB) 12, external sensors 15, vehicle sensors 16, a controller 19, a steering actuator 21a, an accelerator actuator 21b, and a brake actuator 21c.

The positioning device 11 measures the current position of the own vehicle 1. The positioning device 11 includes, for example, a global navigation satellite system (GNSS) receiver. In the map database 12, map data are stored. The map data stored in the map database 12 may be, for example, map data for navigation or high-definition map data that is suitable as a map for autonomous driving.

The external sensors 15 detect an object existing in a predetermined distance range from the own vehicle 1. The external sensors 15 detect a surrounding environment of the own vehicle 1, such as a relative position between an object existing in surroundings of the own vehicle 1 and the own vehicle 1, distance between the own vehicle 1 and the object, and a direction in which the object exists. The external sensors 15 may include, for example, a camera to capture an image depicting the surrounding environment of the own vehicle 1. The external sensors 15 may include a ranging device, such as a laser range finder, a radar, a light detection and ranging (LiDAR), and a sonar.

The vehicle sensors 16 detect various information (vehicle information) about the own vehicle 1. For example, the vehicle sensors 16 may include a vehicle speed sensor to detect traveling speed of the own vehicle 1, an acceleration sensor to detect acceleration (including deceleration) in three axial directions of the own vehicle 1, a steering angle sensor to detect a steering angle of steered wheels or a steering wheel of the own vehicle 1, a torque sensor to detect steering torque applied to the steering wheel, a current sensor to detect driving current of each of the steering actuator 21a, the accelerator actuator 21b, and the brake actuator 21c, and a temperature sensor to detect temperature of each of the steering actuator 21a, the accelerator actuator 21b, the brake actuator 21c, and the controller 19.

The steering actuator 21a controls steering direction and the amount of steering of a steering mechanism of the own vehicle 1 in accordance with a control signal from the controller 19. For example, when the steering mechanism of the own vehicle 1 includes a steer-by-wire system where the steering wheel and the steered wheels are mechanically separated, the steering actuator 21a may be a turning motor that generates steering force to turn the steered wheels. For example, when the steering mechanism is an electric power steering system where steering assist force assisting a driver in steering the steering wheel is provided, the steering actuator 21a may be a steering assist motor that generates steering assist force. Note that the steering mechanism may include a backup clutch that mechanically connects or separates between the steering wheel and the steered wheels. By means of engaging and releasing the backup clutch, the electric power steering system and the steer-by-wire system may be switched.

An accelerator actuator 21b controls accelerator opening of a drive device, which is an engine or a drive motor, in accordance with a control signal from the controller 19. A brake actuator 21c causes a braking device to operate in accordance with a control signal from the controller 19.

The controller 19 is an electronic control unit that performs the parking assistance control and the travel assistance control of the own vehicle 1. The controller 19 includes a processor 19a and a peripheral component, such as a storage device 19b. The processor 19a may be, for example, a CPU or an MPU. The storage device 19b may include a semiconductor storage device, a magnetic storage device, an optical storage device, or the like. Functions of the controller 19, which will be described below, are achieved by, for example, the processor 19a executing computer programs stored in the storage device 19b.

For example, in the parking assistance control, the controller 19 may detect the target parking position around the own vehicle 1 and control the steering actuator 21a, the accelerator actuator 21b, and the brake actuator 21c in such a way that the own vehicle 1 travels from the current position to the target parking position. In addition, for example, in the lane keeping assistance control, the controller 19 may recognize lane markers of a travel lane that is a lane in which the own vehicle 1 is traveling, based on detection signals from the external sensors 15, and control the steering actuator 21a in such a way that the own vehicle 1 travels along the travel lane (for example, in such a way that the own vehicle 1 travels at a predetermined lateral direction position in the travel lane). In addition, for example, in the autonomous driving control, the controller 19 may control the steering actuator 21a, the accelerator actuator 21b, and the brake actuator 21c in such a way that the own vehicle 1 travels along the target travel route to the set destination.

When the controller 19 automatically steers the steered wheels, there are some cases where even when the steering actuator 21a is driven, the steered wheels cannot be steered to a target steering angle and a state in which steering is stopped continues. For example, when the steering angle does not increase due to the steered wheels being in contact with an obstacle or the like, there are some cases where even when the steering actuator 21a is driven, the steered wheels cannot be steered to the target steering angle and the state in which the steering is stopped continues. In addition, when rack end hitting that is a state in which a rack shaft of the steering mechanism reaches a stroke end occurs, there are also some cases where the steered wheels cannot be steered to the target steering angle and the state in which the steering is stopped continues. Even when the driver manually steers, there are also some cases where the steering actuator 21a continues to output steering assist force while the steering of the steered wheels remains stopped for similar reasons.

When the driving of the steering actuator 21a continues while the steering of the steered wheels is stopped in this way, large driving current continues to flow due to increase in output torque of the steering actuator 21a, leading to abnormal overheating of the steering actuator 21a. Therefore, it is required to limit the driving current in such cases.

On the other hand, in a specific scene, there are some cases where the steering angle of the steered wheels of the own vehicle 1 is maintained at a maximum allowable steering angle. For example, when the own vehicle 1 is to be parked, there are some cases where the steering angle of the steered wheels is maintained at the maximum allowable steering angle. When the steered wheels are to be steered to the maximum allowable steering angle, there are some cases where the rack end hitting occurs due to alignment error or neutral position error of the steering mechanism, and thus the steered wheels cannot be steered to the target steering angle and the state in which the steering is stopped continues. Thus, when the driving current of the steering actuator 21a is limited when rack end hitting occurs in a specific scene, there is a risk that the steering angle of the steered wheels becomes unable to be maintained at the maximum allowable steering angle. In the case of manual steering, there is a risk that the steering assist force is reduced, giving the driver a sense of discomfort.

Therefore, the controller 19 detects whether or not a state in which the rack shaft is positioned near a stroke end has occurred. The controller 19 may detect whether or not rack end hitting has occurred as the state in which the rack shaft is positioned near a stroke end. When the rack shaft is positioned near a stroke end and the driving current of the steering actuator 21a is greater than or equal to a predetermined value Ipre, the controller 19 sets an upper limit of the driving current of the steering actuator 21a to a first upper limit IL1 that is less than the predetermined value Ipre. For example, the controller 19 may set the first upper limit IL1 to a minimum value of the driving current that allows the steering angle of the steered wheels to be maintained without decreasing from the maximum allowable steering angle.

On the other hand, when the rack shaft is not positioned near a stroke end and the driving current of the steering actuator 21a is greater than or equal to the predetermined value Ipre, the controller 19 sets the upper limit of the driving current of the steering actuator 21a to a second upper limit IL2 that is less than the first upper limit IL1. For example, the controller 19 may set the second upper limit to zero. In addition, the controller 19 may set the second upper limit to a value greater than 0 and less than the first upper limit IL1 such that the second upper limit does not give the driver a sense of discomfort or to a maximum value of the driving current that does not lead to abnormal overheating.

FIG. 2 is a block diagram of an example of a functional configuration of the controller 19 that controls the steering force generated by the steering actuator 21a. The controller 19 includes a target steering angle setting unit 30, a current command value setting unit 31, a rack end hitting detection unit 32, a current limiting unit 33, and a driving unit 34.

The target steering angle setting unit 30 sets a target steering angle θt that is a target value of the steering angle of the steered wheels or the steering wheel in the parking assist control or the travel assistance control. For example, in the autonomous driving control, the target steering angle setting unit 30 may set a target steering angle θt for causing the own vehicle 1 to travel along a target travel trajectory that is set based on the surrounding environment around and the travel state of the own vehicle 1. In addition, for example, in the lane keeping assistance control, the target steering angle setting unit 30 may set a target steering angle θt for causing the own vehicle 1 to travel along a target travel trajectory that passes a predetermined lateral direction position with reference to lane markers detected in front of the own vehicle 1. In addition, for example, in the parking assistance control, the target steering angle setting unit 30 may set a target steering angle θt for causing the own vehicle 1 to travel along a target parking route starting from the current position of the own vehicle 1 and reaching the target parking position.

The current command value setting unit 31 sets a current command value Ic that is a target value of the driving current of the steering actuator 21a. For example, when the parking assistance control or the travel assistance control is executed, the current command value setting unit 31 may set the current command value Ic, based on deviation between an actual steering angle θa of the steered wheels or the steering wheel detected by the steering angle sensor in the vehicle sensors 16 and the target steering angle θt. In addition, at the time of manual steering, the current command value setting unit 31 may set the current command value Ic, based on steering torque applied to the steering wheel that is detected by the torque sensor in vehicle sensors 16.

The rack end hitting detection unit 32 determines whether or not the state in which the rack shaft is positioned near a stroke end has occurred. For example, the rack end hitting detection unit 32 may determine, as the state in which the rack shaft is positioned near a stroke end, whether or not rack end hitting has occurred.

For example, the rack end hitting detection unit 32 may detect a stroke amount of the rack shaft by a stroke sensor, and detect that the rack shaft is positioned near a stroke end when the stroke amount is greater than or equal to a first predetermined value and less than or equal to a second predetermined value. In addition, for example, the rack end hitting detection unit 32 may detect that the rack shaft is positioned near a stroke end when the driving current of the steering actuator 21a is greater than or equal to a third predetermined value and less than or equal to a fourth predetermined value. In addition, for example, as described in a second embodiment, which will be described later, the rack end hitting detection unit 32 may determine, based on steering angular velocity of the steered wheels or the steering wheel and the driving current of the steering actuator 21a detected by the current sensor in the vehicle sensors 16, whether or not the state in which the rack shaft is positioned near a stroke end has occurred.

The current limiting unit 33 limits a maximum value of the current command value Ic when the driving current of the steering actuator 21a, which is detected by the current sensor in the vehicle sensors 16, is greater than or equal to the predetermined value Ipre.

Specifically, when the rack end hitting detection unit 32 determines that the rack shaft is positioned near a stroke end and the driving current of the steering actuator 21a is greater than or equal to the predetermined value Ipre, the current limiting unit 33 sets the upper limit of the current command value Ic to the first upper limit IL1, which is less than the predetermined value Ipre. On the other hand, when the rack end hitting detection unit 32 does not determine that the rack shaft is positioned near a stroke end and the driving current of the steering actuator 21a is greater than or equal to the predetermined value Ipre, the current limiting unit 33 sets the upper limit of the current command value Ic to the second upper limit IL2, which is less than the first upper limit IL1.

In addition, the current limiting unit 33 limits the maximum value of the current command value Ic when temperature of the steering actuator 21a or the controller 19 detected by the temperature sensor in the vehicle sensors 16 exceeds a predetermined temperature threshold value.

The driving unit 34 drives the steering actuator 21a in accordance with the current command value Ic the maximum value of which is limited by the current limiting unit 33. For example, drive voltage applied to the steering actuator 21a is controlled in such a way that deviation between the current command value Ic, the maximum value of which is limited by the current limiting unit 33, and the driving current of the steering actuator 21a, which is detected by the current sensor in the vehicle sensors 16, decreases.

### (Operation)

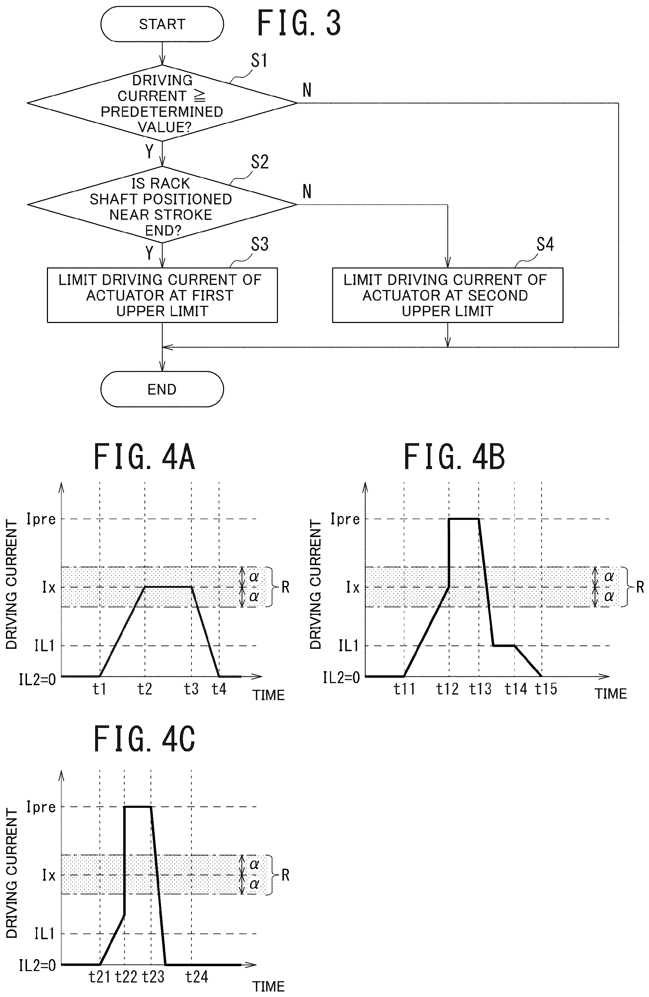

FIG. 3 is a flowchart of a steering control method of the first embodiment. In step S1, the current limiting unit 33 determines whether or not the driving current of the steering actuator 21a is greater than or equal to the predetermined value Ipre. When the driving current is not greater than or equal to the predetermined value Ipre (step S1: N), the steering actuator 21a is driven based on the current command value Ic set by the current command value setting unit 31. Note that the maximum value of the current command value Ic may be limited when the temperature of the steering actuator 21a or the controller 19, detected by the temperature sensor in the vehicle sensors 16, exceeds the predetermined temperature threshold value.

When the driving current is greater than or equal to the predetermined value Ipre (step S1: Y), the process proceeds to step S2. In step S2, the rack end hitting detection unit 32 determines whether or not the state in which the rack shaft is positioned near a stroke end has occurred.

When the rack shaft is positioned near a stroke end (step S2: Y), the process proceeds to step S3. When the rack shaft is not positioned near a stroke end (step S2: N), the process proceeds to step S4.

In step S3, the current limiting unit 33 limits the driving current of the steering actuator 21a to less than or equal to the first upper limit IL1, which is less than the predetermined value Ipre.

In step S4, the current limiting unit 33 limits the driving current of the steering actuator 21a to less than or equal to the second upper limit IL2, which is less than the first upper limit IL1.

### (Second Embodiment)

A controller 19 in the second embodiment determines, based on steering angular velocity of steered wheels or a steering wheel and driving current of a steering actuator 21a detected by a current sensor in vehicle sensors 16, whether or not a state in which a rack shaft is positioned near a stroke end has occurred. For example, the controller 19 determines whether or not rack end hitting has occurred.

FIG. 2 is now referred to. A rack end hitting detection unit 32 determines that the state in which the rack shaft is positioned near a stroke end has occurred (for example, determines whether or not the state in which the rack shaft is positioned near a stroke end has occurred) when steering angular velocity of the steered wheels or the steering wheel is less than or equal to an angular velocity threshold value and the driving current of the steering actuator 21a falls within a threshold range R that is set to be less than a predetermined value Ipre. The rack end hitting detection unit 32 does not determine that the state in which the rack shaft is positioned near a stroke end has occurred (for example, does not determine whether or not the state in which the rack shaft is positioned near a stroke end has occurred) when the steering angular velocity of the steered wheels or the steering wheel is not less than or equal to the angular velocity threshold value or the driving current of the steering actuator 21a does not fall within the threshold range R, which is set to be less than the predetermined value Ipre.

For example, the rack end hitting detection unit 32 may calculate the steering angular velocity by taking the time derivative of a steering angle detected by a steering angle sensor in the vehicle sensors 16.

In addition, for example, the threshold range R may be set based on driving current Ix that flows to the steering actuator 21a when the steered wheels are steered to a maximum allowable steering angle without rack end hitting occurring. For example, a range where the driving current is greater than or equal to a lower limit (Ix-α) and less than or equal to an upper limit (Ix+α), where α denotes a predetermined margin, may be set as the threshold range R. In the following description, the driving current Ix is sometimes referred to as "rack end driving current Ix".

Action of the controller 19 in the second embodiment will be described with reference to FIGS. 4A to 4C. FIG. 4A is a schematic diagram of change in the driving current of the steering actuator 21a when a state in which the steered wheels become unable to be steered before being steered to the target steering angle does not occur.

When the steering is started at time t1, a steering angle of the steered wheels increases following increase in the target steering angle and the driving current increases in association with the increase in the steering angle. In the example in FIG. 4A, since the steered wheels can be controlled in such a way as to follow the target steering angle, no rapid increase in the driving current occurs. Thus, the driving current is maintained less than or equal to the threshold range R, and a current limiting unit 33 does not perform limitation of the driving current. Subsequently, when the steered wheels are steered to the maximum allowable steering angle without rack end hitting occurring, the driving current reaches the rack end driving current Ix at time t2 and stops increasing. Subsequently, the steered wheels are maintained at the maximum allowable steering angle until time t3. Since in the meantime, the steered wheels can be control to follow the target steering angle without rack end hitting occurring, the current limiting unit 33 does not perform limitation of the driving current. As a result, the driving current is maintained at the rack end driving current Ix. When the steering angle starts to be decreased at time t3, the driving current is reduced, and when steering control is terminated at time t4, the driving current returns to 0.

FIG. 4B is a schematic diagram of change in the driving current when rack end hitting occurs. When the steering is started at time t11, the steering angle of the steered wheels increases following increase in the target steering angle and the driving current increases in association with the increase in the steering angle. When the steering angle of the steered wheel comes sufficiently close to the maximum allowable steering angle, the value of the driving current enters the threshold range R. When rack end hitting occurs at time t12, the steering of the steered wheels is suspended, causing the steering angular velocity to become less than or equal to the angular velocity threshold value. Therefore, since the steering angular velocity is less than or equal to the angular velocity threshold value and the driving current falls within the threshold range R, the rack end hitting detection unit 32 determines that rack end hitting has occurred. That is, the rack end hitting detection unit 32 determines that the rack shaft is positioned near a stroke end.

When rack end hitting occurs, the state in which the steered wheels become unable to be steered to the target steering angle continues, causing the driving current of the steering actuator 21a to rapidly increase to the predetermined value Ipre. Thus, at time t13, the current limiting unit 33 sets an upper limit of the driving current to a first upper limit IL1. Because of this configuration, the driving current is limited to the first upper limit IL1. When the steering angle starts to be decreased at time t14, the driving current is reduced, and when steering control is terminated at time t15, the driving current returns to 0.

FIG. 4C is a schematic diagram of change in the driving current when the steered wheels become unable to be steered before rack end hitting occurs. When the steering is started at time t21, the steering angle of the steered wheels increases following increase in the target steering angle and the driving current increases in association with the increase in the steering angle. In FIG. 4C, a case is assumed where the steering is suspended for a reason such as the steered wheels coming into contact with an obstacle or the like at time t22 before the steering angle of the steered wheels comes sufficiently close to the maximum allowable steering angle. Thus, the driving current of the steering actuator 21a rapidly increases to the predetermined value Ipre before the value of the driving current falls within the threshold range R. Therefore, the rack end hitting detection unit 32 does not detect a state in which the driving current falls within the threshold range R, and thus does not detect occurrence of rack end hitting. That is, the rack end hitting detection unit 32 does not determine that the rack shaft is positioned near a stroke end.

Therefore, at time t23, the current limiting unit 33 sets the upper limit of the driving current to a second upper limit IL2. Because of this configuration, the driving current is limited to the second upper limit IL2. Subsequently, the driving current is maintained at 0 until the steering control is terminated at time t24.

### (Third Embodiment)

A controller 19 of a third embodiment executes parking assistance control that assists parking at a target parking position that is registered in advance. In place of or in addition to such parking assistance control, the controller 19 may execute parking assistance control that assists parking at a target parking position that is not registered in advance. In the following description, a control mode of the parking assistance control assisting parking at a target parking position registered in advance and a control mode of the parking assistance control assisting parking at a target parking position not registered in advance are sometimes referred to as "first assistance mode" and "second assistance mode", respectively.

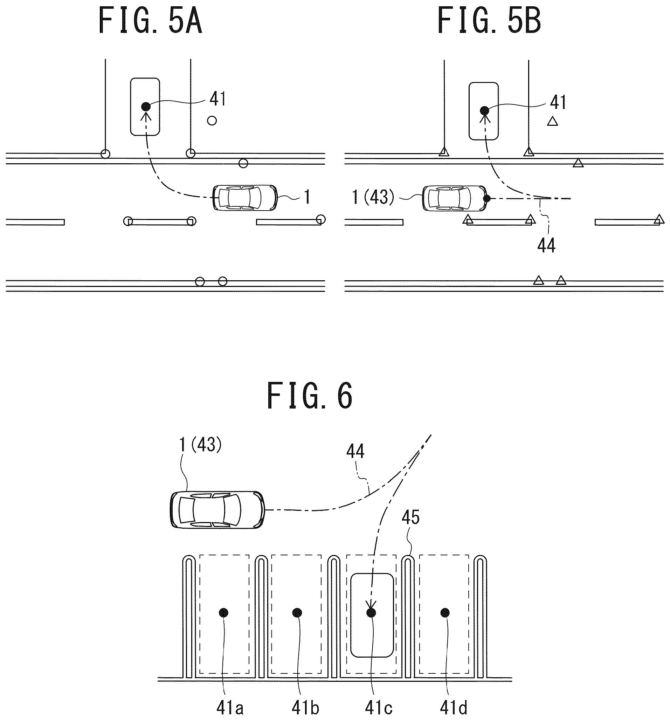

FIGS. 5A and 5B are schematic diagrams descriptive of the parking assistance control in the first assistance mode. When the parking assistance control in the first assistance mode is used, a target parking position 41 at which an own vehicle 1 is to be parked is registered in a driving assistance device 10 in advance. Specifically, a target object existing in surroundings of the target parking position 41 is extracted and stored (registered) in a storage device 19b in advance. In the following description, a target object in the surroundings of the target parking position 41 to be stored in the storage device 19b is referred to as "learned target object". In FIG. 5A, circular marks schematically represent learned target objects. When the target parking position 41 is registered in the driving assistance device 10, a user, for example, performs an operation to instruct registration of the target parking position 41 (hereinafter, sometimes referred to as "registration operation").

For example, the controller 19 detects a target object in surroundings of the own vehicle 1 by external sensors 15 and stores the detected target object as a learned target object when the own vehicle 1 is positioned in a vicinity of the target parking position 41 (for example, when the user parks the own vehicle 1 at the target parking position 41 by manual driving). For example, the controller 19 may detect a target object from a surrounding image that is obtained by capturing the surroundings of the own vehicle 1 by a camera. For example, the controller 19 may detect, as a target object, an edge point where luminance changes between adjacent pixels by a predetermined amount or more or a point having a characteristic shape (a feature point), such as an edge or a corner of a target object like a pavement marking, a road boundary, an obstacle, or the like, in the captured image obtained by capturing the surroundings by the camera.

The controller 19 stores learned target object data relating to a learned target object in the storage device 19b. For example, the learned target object data may include data representing a feature amount of a learned target object (hereinafter, referred to as "feature amount data") and data representing a relative positional relationship between the target parking position 41 and the learned target object (hereinafter, referred to as "relative position data").

As the relative position data, a relative position of a learned target object with reference to the target parking position 41 may be stored. For example, the controller 19 can acquire a position of a learned target object detected when the own vehicle 1 is parked at the target parking position 41 as a relative position of the learned target object with reference to the target parking position 41. The controller 19 may store coordinates of a learned target object and the target parking position 41 in a coordinate system with a fixed point as a reference point (hereinafter, referred to as "map coordinate system").

FIG. 5B is an explanatory diagram of an example of processing performed when parking assistance is performed. For example, the controller 19 may start the parking assistance control of the own vehicle 1 when a user operation instructing start of the parking assistance control of the own vehicle 1 is performed. In addition, the controller 19 may automatically start the parking assistance control when the own vehicle 1 approaches the registered target parking position 41.

When the parking assistance control is started, the controller 19 extracts a target object in the surroundings of the own vehicle 1 by the external sensors 15. In the following description, a target object in the surroundings of the own vehicle 1 that is extracted when the parking assistance is performed is referred to as "surrounding target object". In FIG. 5B, triangular marks represent surrounding target objects. The controller 19 detects the target parking position 41 by matching a learned target object and a surrounding target object with each other and associating the same feature points with each other. The controller 19 calculates a relative position of the own vehicle 1 with respect to the target parking position 41, based on a relative positional relationship between a surrounding target object detected when the parking assistance is performed and the own vehicle 1 and a relative positional relationship between a learned target object associated with the surrounding target object and the target parking position 41.

For example, the controller 19 calculates a position of the target parking position 41 in a coordinate system with reference to the current position of the own vehicle 1 (hereinafter, referred to as "vehicle coordinate system"). Note that when coordinates of the learned target object and the target parking position 41 in the map coordinate system are stored in the storage device 19b, the controller 19 may convert the coordinates of the target parking position 41 in the map coordinate system to coordinates in the vehicle coordinate system, based on the position of the surrounding target object detected when the parking assistance is performed and the position of the learned target object in the map coordinate system. The controller 19 may calculate the self-position of the own vehicle 1 in the map coordinate system, based on the position of the surrounding target object detected when the parking assistance is performed and the position of the learned target object in the map coordinate system, and calculate the relative position of the own vehicle 1 with respect to the target parking position 41 from a difference between the coordinates of the own vehicle 1 and the coordinates of the target parking position 41 in the map coordinate system. The controller 19 calculates a target parking route 44 starting from a current position 43 of the own vehicle 1 and reaching the target parking position 41. The controller 19 performs the parking assistance control of the own vehicle 1, based on the calculated target parking route 44.

FIG. 6 is a schematic diagram descriptive of the parking assistance control in the second assistance mode. When the user performs a starting operation instructing start of the parking assistance control, the controller 19 starts the parking assistance of the own vehicle 1. When the parking assistance control in the second assistance mode is started, the controller 19 detects spaces in the surroundings of the own vehicle 1 where a vehicle can be parked as target parking positions 41a to 41d, based on a detection result of the external sensors 15 detecting white lines 45 in the surroundings of the own vehicle 1 and surrounding objects around the own vehicle 1. Hereinafter, the target parking positions 41a to 41d are sometimes collectively referred to as "target parking positions 41".

For example, the controller 19 may detect a space in the surroundings of the own vehicle 1 where a vehicle can be parked as a target parking position 41, based on a detection result of parking slot lines 45 that indicate a parking space. In addition, for example, the controller 19 may detect parked vehicles as surrounding objects around the own vehicle 1 and detect an inter-vehicle space between the parked vehicles as a target parking position 41. The controller 19 calculates a target parking route 44 starting from the current position 43 of the own vehicle 1 and reaching the target parking position 41. The controller 19 performs the parking assistance control of the own vehicle 1, based on the calculated target parking route 44.

FIG. 2 is now referred to. In the third embodiment, a current limiting unit 33 sets a first upper limit IL1 for limiting a current command value Ic to different values depending on whether the controller 19 is performing the parking assistance control or a driver is manually steering the steering wheel. For example, the current limiting unit 33 may set the first upper limit IL1 in the case where the controller 19 is performing the parking assistance control to a comparatively large value IL1a and the first upper limit IL1 in the case where the driver is manually steering the steering wheel to a comparatively small value IL1b (that is, a value smaller than the value IL1a). This is because when the driver is manually steering the steering wheel, steering the steered wheels requires the steering actuator 21a to generate a small steering force since steering force generated by the driver is applied to a steering mechanism. Because of this configuration, it is possible to further reduce driving current of the steering actuator 21a when rack end hitting occurs and thereby reduce heat generation.

Note that when the steering mechanism of the own vehicle 1 is a steer-by-wire system or when the above-described backup clutch is released, the steering force generated by the driver is not applied to the steering mechanism. Thus, when the driver manually steers using the electric power steering system or when the driver manually steers while the backup clutch is engaged, the first upper limit IL1 may be set to the comparatively small value IL1b, and when the driver manually steers using the steer-by-wire system or when the driver manually steers while the backup clutch is released, the first upper limit IL1 may be set to the comparatively large value IL1a, as with when the parking assistance control is performed.

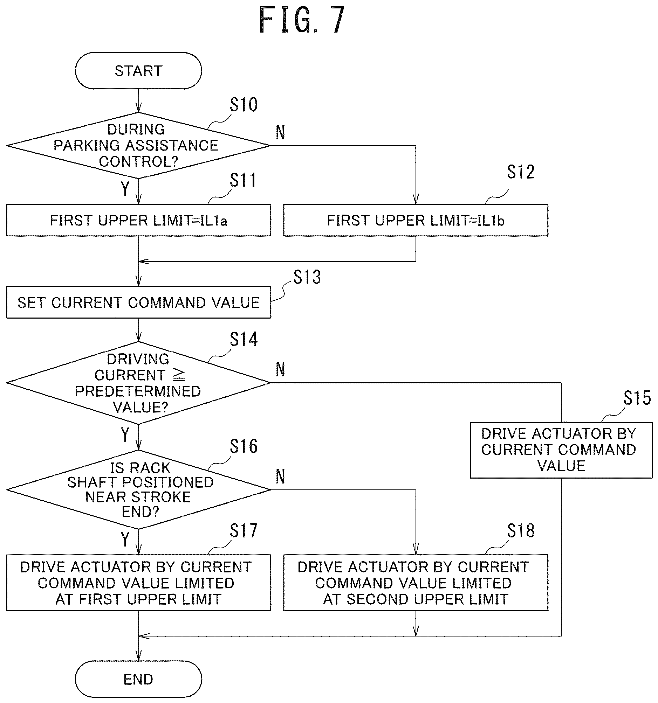

FIG. 7 is a flowchart of a steering control method of the third embodiment. In step S10, the current limiting unit 33 determines whether or not the parking assistance control is performed. When the parking assistance control is performed (step S10: Y), the process proceeds to step S11. When the driver manually steers (step S10: N), the process proceeds to step S12. In step S11, the current limiting unit 33 sets the first upper limit IL1 to the comparatively large value IL1a. Subsequently, the process proceeds to step S13. In step S12, the current limiting unit 33 sets the first upper limit IL1 to the comparatively small value IL1b. Subsequently, the process proceeds to step S13.

In step S13, the current command value setting unit 31 sets the current command value Ic that is a target value of the driving current of the steering actuator 21a. In step S14, the current limiting unit 33 determines whether or not the driving current of the steering actuator 21a detected by a current sensor in the vehicle sensors 16 is greater than or equal to a predetermined value Ipre. When the driving current is not greater than or equal to the predetermined value Ipre (step S14: N), the process proceeds to step S15. When the driving current is greater than or equal to the predetermined value Ipre (step S14: Y), the process proceeds to step S16. In step S15, a driving unit 34 drives the steering actuator 21a, based on the current command value Ic set by the current command value setting unit 31. Note that a maximum value of the current command value Ic may be limited when temperature of the steering actuator 21a or the controller 19 detected by a temperature sensor in the vehicle sensors 16 exceeds a predetermined temperature threshold value.

In step S16, a rack end hitting detection unit 32 determines whether or not a state in which a rack shaft is positioned near a stroke end has occurred. When the rack shaft is positioned near a stroke end (step S16: Y), the process proceeds to step S17. When the rack shaft is not positioned near a stroke end (step S16: N), the process proceeds to step S18. In step S17, the current limiting unit 33 limits the current command value Ic at the first upper limit IL1. The driving unit 34 drives the steering actuator 21a in accordance with the current command value Ic limited at the first upper limit IL1. In step S18, the current limiting unit 33 limits the current command value Ic at the second upper limit IL2. The driving unit 34 drives the steering actuator 21a in accordance with the current command value Ic limited at the second upper limit IL2.

### (Advantageous Effects of Embodiments)

(1) A controller 19 controls steering force generated by an actuator 21a configured to steer a steered wheel of an own vehicle 1. The controller 19: detects a state in which a rack shaft of a steering mechanism configured to steer the steered wheel is positioned near a stroke end; limits, when the rack shaft is positioned near a stroke end and driving current of the actuator 21a is greater than or equal to a predetermined value Ipre, driving current of the actuator 21a at a first upper limit, the first upper limit being less than the predetermined value Ipre; and limits, when the rack shaft is not positioned near a stroke end and driving current of the actuator 21a is greater than or equal to the predetermined value Ipre, driving current of the actuator 21a at a second upper limit, the second upper limit being less than the first upper limit. Because of this configuration, the steering angle can be maintained at the maximum allowable steering angle when rack end hitting occurs and it is also possible to prevent overheating of the actuator due to continuation of a state in which even when the actuator is driven, the steered wheel cannot be steered to the target steering angle.
(2) For example, the second upper limit may be zero. Because of this configuration, it is possible to prevent overheating of the actuator 21a when the steered wheel becomes unable to be steered before being steered to the maximum allowable steering angle.
(3) The first upper limit may be a current value enabling a current steering angle to be maintained. Because of this configuration, it is possible to prevent overheating of the actuator 21a while maintaining the steering angle at the maximum allowable steering angle when rack end hitting occurs.
(4) The controller 19 may determine, when steering angular velocity of the steered wheel or a steering wheel is less than or equal to an angular velocity threshold value and driving current of the actuator 21a falls within a threshold range, the threshold range being set to a range less than the predetermined value Ipre, that the rack shaft is positioned near a stroke end. Because of this configuration, it is possible to determine whether or not rack end hitting has occurred with high precision even when alignment error or neutral position error of the steering mechanism exists.
(5) The first upper limit at a time of manual steering may be set to a smaller value than the first upper limit in a case of automatic parking control, the automatic parking control controlling the own vehicle 1 in such a way that the own vehicle 1 travels to a target parking position. Because of this configuration, it is possible to prevent overheating of the actuator 21a by reducing driving current of the actuator 21a when rack end hitting occurs at the time of manual steering to a lower value than that when automatic parking control is executed.
(6) The controller 19 may: detect a target object present in surroundings of the target parking position in advance and register data representing a relative positional relationship between the detected target object and the target parking position in a storage device as learned target object data; detect, at a time of causing the own vehicle 1 to travel to the target parking position after registering the learned target object data in the storage device, a position of a surrounding target object, the surrounding target object being a target object present in surroundings of the own vehicle 1; calculate a relative positional relationship between the target parking position and a current position of the own vehicle 1, based on the learned target object data and a position of the surrounding target object; generate a target parking route starting from a current position of the own vehicle 1 and reaching the target parking position, based on the calculated relative positional relationship; and control the own vehicle 1 to travel to the target parking position along the target parking route. Because of this configuration, a user can use parking assistance control assisting parking of the own vehicle 1 at a target parking position registered in advance.

All examples and conditional language provided herein are intended for the pedagogical purposes of aiding the reader in understanding the invention and the concepts contributed by the inventor to further the art, and are not to be construed as limitations to such specifically recited examples and conditions, nor does the organization of such examples in the specification relate to a showing of the superiority and inferiority of the invention. Although one or more embodiments of the present invention have been described in detail, it should be understood that the various changes, substitutions, and alterations could be made hereto without departing from the spirit and scope of the invention.

### Reference Signs List

- 1: Own vehicle
- 10: Driving assistance device
- 11: Positioning device
- 12: Map database
- 15: External sensor
- 16: Vehicle sensor
- 19: Controller
- 19a: Processor
- 19b: Storage device
- 21a: Steering actuator
- 21b: Accelerator actuator
- 21c: Brake actuator
- 30: Target steering angle setting unit
- 31: Current command value setting unit
- 32: Rack end hitting detection unit
- 33: Current limiting unit
- 34: Driving unit

## Claims

1. A steering control method for controlling steering force generated by an actuator configured to steer a steered wheel of a vehicle, the steering control method comprising:
detecting a state in which a rack shaft of a steering mechanism configured to steer the steered wheel is positioned near a stroke end;
limiting, when the rack shaft is positioned near a stroke end and driving current of the actuator is greater than or equal to a predetermined value, driving current of the actuator at a first upper limit, the first upper limit being less than the predetermined value; and
limiting, when the rack shaft is not positioned near a stroke end and driving current of the actuator is greater than or equal to the predetermined value, driving current of the actuator at a second upper limit, the second upper limit being less than the first upper limit.

2. The steering control method according to claim 1, wherein the second upper limit is zero.

3. The steering control method according to claim 1 or 2, wherein the first upper limit is a current value enabling a current steering angle to be maintained.

4. The steering control method according to any one of claims 1 to 3, wherein when steering angular velocity of the steered wheel or a steering wheel is less than or equal to an angular velocity threshold value and driving current of the actuator falls within a threshold range, the threshold range being set to a range less than the predetermined value, the steering control method determines that the rack shaft is positioned near a stroke end.

5. The steering control method according to any one of claims 1 to 4, wherein the steering control method sets the first upper limit at a time of manual steering to a smaller value than the first upper limit in a case of automatic parking control, the automatic parking control controlling the vehicle in such a way that the vehicle travels to a target parking position.

6. The steering control method according to claim 5 comprising:
detecting a target object present in surroundings of the target parking position in advance and registering data representing a relative positional relationship between the detected target object and the target parking position in a storage device as learned target object data;
detecting, at a time of causing the vehicle to travel to the target parking position after registering the learned target object data in the storage device, a position of a surrounding target object, the surrounding target object being a target object present in surroundings of the vehicle;
calculating a relative positional relationship between the target parking position and a current position of the vehicle, based on the learned target object data and a position of the surrounding target object;
generating a target parking route starting from a current position of the vehicle and reaching the target parking position, based on the calculated relative positional relationship; and
controlling the vehicle to travel to the target parking position along the target parking route.

7. A steering control device comprising:
an actuator configured to steer a steered wheel of a vehicle; and
a controller configured to: detect a state in which a rack shaft of a steering mechanism configured to steer the steered wheel is positioned near a stroke end; limit, when the rack shaft is positioned near a stroke end and driving current of the actuator is greater than or equal to a predetermined value, driving current of the actuator at a first upper limit, the first upper limit being less than the predetermined value; and limit, when the rack shaft is not positioned near a stroke end and driving current of the actuator is greater than or equal to the predetermined value, driving current of the actuator at a second upper limit, the second upper limit being less than the first upper limit.
